(19) Europäisches Patentamt
European Patent Office
Office européen des brevets

(11)  **EP 3 974 399 B1**

(12)  **EUROPEAN PATENT SPECIFICATION**

(45)  Date of publication and mention
      of the grant of the patent:
      **06.09.2023  Bulletin 2023/36**

(51)  International Patent Classification (IPC):
      **C03C 27/02** *(2006.01)*        **C03B 19/00** *(2006.01)*
      **C03C 27/04** *(2006.01)*

(21)  Application number: **20198143.8**

(52)  Cooperative Patent Classification (CPC):
      **C03C 27/02; C03C 27/042; C03C 27/044;
      C03C 27/046**

(22)  Date of filing: **24.09.2020**

(54)  **COMPONENT WITH A GLASS ELEMENT AND METHOD FOR PRODUCING THE SAME**

BAUTEIL MIT EINEM GLASFENSTER UND VERFAHREN ZU DESSEN HERSTELLUNG

COMPOSANT COMPRENANT UNE FENÊTRE EN VERRE ET SON PROCÉDÉ DE PRODUCTION

(84)  Designated Contracting States:
      **AL AT BE BG CH CY CZ DE DK EE ES FI FR GB
      GR HR HU IE IS IT LI LT LU LV MC MK MT NL NO
      PL PT RO RS SE SI SK SM TR**

(43)  Date of publication of application:
      **30.03.2022  Bulletin 2022/13**

(73)  Proprietor: **SCHOTT AG
      55122 Mainz (DE)**

(72)  Inventor: **HETTLER, Robert
      84036 Kumhausen (DE)**

(74)  Representative: **Blumbach · Zinngrebe
      Patentanwälte PartG mbB
      Alexandrastraße 5
      65187 Wiesbaden (DE)**

(56)  References cited:
      **US-A- 4 921 738          US-A1- 2016 268 791
      US-A1- 2019 112 225**

      • CHOU Y S ET AL: "Effect of aluminizing of
      Cr-containing ferritic alloys on the seal strength
      of a novel high-temperature solid oxide fuel cell
      sealing glass", JOURNAL OF POWER SOURCES,
      ELSEVIER SA, CH, vol. 185, no. 2, 1 December
      2008 (2008-12-01), pages 1001-1008,
      XP025672734, ISSN: 0378-7753, DOI:
      10.1016/J.JPOWSOUR.2008.09.004 [retrieved on
      2008-09-07]

**Description**

Field of invention

The present application relates to components comprising a sealed glass element, such as a glass-to-metal-seal. In particular, the present application relates to a component comprising a base body and a glass element that may be used in a housing for further components, especially such further components that are sensitive, for example to moisture, and need to be sealed.

Background of invention

Glass-to-metal seal technology is used for encapsulating sensor chips or devices which are sensitive or require water proof or dust proof enclosure. It is known to produce the metal parts by stamping or cold forging. Further, CNC machining may be used. However, CNC machining for complex features is a costly method.

Further, metals and glass have very distinct chemical and mechanical properties so that a hermetic joint between this materials may be different to achieve or to maintain over long time spans.

US 4 921 738 A describes a method to provide a hermitically sealed glass ceramic-metal composite body. The materials are selected in view of their thermal expansion coefficients and the surface conditions of the metal member are carefully controlled during the process. Further, heating cycles are being used in manufacturing the composite body. The hermetically sealed glass ceramic-metal composite body comprises a cylindrical metal member comprising on an iron-based alloy, a crystallized LAS glass ceramic member fixed with the metal member and an interfacial layer between the metal member and the glass ceramic member, wherein the interfacial layer consists of aluminum oxide.

Object of invention

It is therefore an object of the invention to provide a component with a glass element with a base body with an improved joint between the glass and the base body. This object is solved by the subject matter of the independent claims. Advantageous refinements of the invention are defined in the dependent claims.

Summary of invention

Accordingly, a component with a base body and a least one glass element , as defined in claim 1 is provided. In particular, this texture is aperiodic, in contrast, e.g., to machined openings. Further, the glass of the glass element is fused into the opening and hermetically seals the opening.

The term glass as used in this description also comprises a glass ceramic, in particular as known from other publications from the applicant. Suitable glass ceramics according to an embodiment are selected from the system MO (M=Mg, Ca)-$Al_2O_3$-BaO-$SiO_2$-$B_2O_3$. Further, glass ceramics sold under the brand name "Heatan" may be employed.

The combination of the characteristic surface texture of the injection molded base body and the fused glass element result in a particular firm anchoring of the glass within the opening. In particular, due to the fusing, the glass closely approximates the surface of the wall, or, in other words wets the surface of the wall so that protrusions and voids at the wall are in contact with the glass. Thus, the fusing to the rough wall and the close approximation result in a positive locking of the glass to the wall surface.

In a preferred embodiment, the interface between the glass of the element and the base body may constitute a substance-to-substance bond, or a chemical bond, respectively, to further enhance the hermeticity of the seal. A substance-to-substance-bond is understood as a bond between materials wherein the bonding partners (base body and glass element) are joined to each other by an atomic and/or molecular force, such as adhesion. Of course, a close approximation of the glass to the wall of the base body is advantageous to promote a thorough substance-to-substance bond.

According to a preferred embodiment, the base body is a metal injection molded part. However, it is also possible to produce the base body by ceramic injection molding. Suitable materials for a ceramic injection molded base body are ceramics containing $ZrO_2$ and $Al_2O_3$.

The component may be produced with a method, according to claim 11.

Generally, the method has the additional advantage that complex designs can be easily realized by the injection molding process. However, coming along with the injection molding, the base body typically has a certain porosity which is also visible at its surface. In this regard it is surprising that not only the base part itself but also the interface to the glass element proves to be hermetically sealed.

In the following, the invention is described in more detail with reference to the accompanying drawings.

Brief description of the drawings

Fig. 1 shows a cross section of a base body.
Fig. 2 shows the base body with a glass element before fusing the glass element into an opening of the base body.
Fig. 3 shows a component with a base body and a glass element,
Fig. 4 shows the component after a finishing step.
Fig. 5 shows element concentrations of iron and chromium along a line crossing the interface between the base body and the glass element.
Fig. 6 shows element concentrations of iron and chromium along a line within the glass element.
Figs. 7 and 8 each show two SEM micrographs of a cross section of a component, wherein the base body of the example of Fig. 7 has a higher porosity than the base body of the example of Fig. 8.
Fig. 9 shows a further SEM micrograph of a cross section at the wall of the opening.
Fig. 10 shows a schematic of a section of the interface region between the base body and the glass element.
Fig. 11 and Fig. 12 show an electronic device with a housing comprising the component with the base body and the glass element.
Fig. 13 shows a cross section of an electronic device.
Fig. 14 shows an embodiment where the glass element forms an insulating element of an electrical feedthrough.

Detailed description of the invention

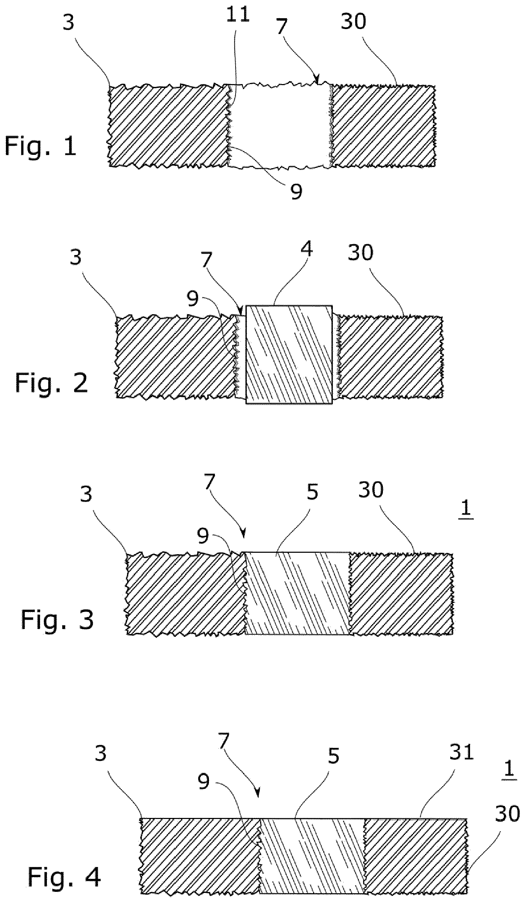

With reference to Figs. 1 to 4, method steps for producing a component 1 with a base body 3 and a glass element 5 according to this disclosure are specified. A base body 3 is provided, which is produced by powder injection molding. Preferably, the powder injection molding is a metal injection molding (MIM) process. As well, a ceramic injection molded part may be used as the base body. For example, the base body may be a $ZrO_2$- or $Al_2O_3$-ceramics. Typical method steps for producing a powder injection molded body include forming a raw body from powder (in particular metal or ceramic powder) and a binder, debinding the raw body to obtain a green body and then sintering the green body to obtain the base body 3. Debinding, i.e. partial removal of the binder may include one or more of removing the binder by solvents, thermal or catalytic processes.

An illustrative example of a base body 3 is shown in Fig. 1. The base body 3 has an opening 7 which serves to accommodate a glass element. The outer surface 30 of the base body 3 as well as the wall 9 of the opening 7 have a certain surface roughness, represented in Fig 1 by a slightly meandering outline. This roughness is caused by the powder injection molding process which involves sintering of particles (i.e. metal particles in a metal injection molding process or ceramic or oxide particles in a ceramic injection molding process). The surface roughness inter alia depends on the grain size of the powder used for producing the base body 3. The surface roughness $R_a$ of the wall is within a range of from 1 $\mu$m to 5 $\mu$m. For example, the surface roughness $R_a$ may have a value of about 3 $\mu$m. These roughness values may be measured using sampling lengths in the range of between 1 mm and 3 mm. Thus, generally, the surface of the base body 3 as provided for the subsequent process steps for producing a component with a glass element has an uneven, rough texture. Further, in difference to typical CNC manufactures parts, the texture has random and, therefore, aperiodic surface features. As shown in Fig. 2, a glass element 4 may be inserted into the opening 7. Then, the base body 3 is heated together with the glass element 4 so that the glass element 4 melts and fuses to the wall 9 of the opening 7. Then, the base body 3 and the glass element 4 are cooled down to produce a glass element 5 that hermetically seals the opening 7. The component 1 derived thereby is shown in Fig. 3. During the sealing process, the glass flows into the uneven wall 9 and voids therein to form additional mechanical interlock or serration, in analogy to a hook-and-loop fastener. According to one embodiment, the composition of the glass may be selected to form a glass ceramic. In this case, ceramization may be initiated during the fusing process so that the glass element is formed from a glass ceramic after cooling down.

The cooling process may be active or passive. According to an embodiment, the glass element 5 is compressively sealed within the opening 7. In other words, after cooling down the metal body 3 exerts a compressive stress to the element 5. This feature can be achieved if the metal body 3 has a higher shrinkage than the glass element during the cooling process. This higher shrinkage may be achieved by selection of the materials, so that the metal body 3 has a higher linear thermal expansion coefficient $\alpha_{Metal}$ compared to the linear thermal expansion coefficient $\alpha_{Glass}$ of the glass element 5. This condition does not need to be met over the whole temperature range of the cooling process. However, a compressive seal in particular can be achieved if $\alpha_{Metal}$ is larger than $\alpha_{Glass}$ in a temperature range below the glass transition temperature $T_g$ of the glass and room temperature (20 °C).

For this embodiment, the material of the base body 3 and the glass are selected so that the linear thermal expansion coefficient of the base body at 20 °C is larger than the linear thermal expansion coefficient of the glass by at least 2 ppm, preferably by at least 5 ppm.

Alternatively or in addition to the compressive seal, the glass of the glass element 5 and the metal of metal part 3 may be chemically bonded together, to provide a particularly robust and hermetical seal.

Further, it is as well possible to use materials for the base body 3 and the glass element having largely matching thermal expansion coefficient. Due to the rough wall texture and the serration of the glass with the wall of the base body, a firm anchoring of the glass element in the opening 7 is ensured even without a compression seal.

Fig. 4 shows the component 1 after a preferred post-processing step. As can be seen, one face 31 of the component 1 is planed or polished, with flushing surfaces of the base body 3 and the glass element 5. Specifically, flushing surfaces are understood as having a height difference or step height at the interface that is 1 $\mu$m at most. By the polishing, the roughness of this face 31 is reduced with respect to the roughness of the opposite side or the wall 9 of the opening 7. The processed surface 31 of the base body 3 is preferably at least partially covered with a passivation layer.

Generally, according to an advantageous refinement, the metal part 3 may at least at the wall 9 of the opening be covered with an oxide layer. This oxide layer can promote a substance-to-substance bond, or chemical bond, respectively. This is of particular advantage for a matched seal of the glass element to the base body, i.e. in the case that there is no substantial compression acting on the glass element. The oxide layer 11 covering the wall 9 of the opening 7 is shown in Figs. 1 and 2. Accordingly, the interface between the glass of the glass element 5 and the wall 9 of the opening 7 in the base body 3 preferably includes an oxide layer 11. As will be further specified below, the oxide layer 11 may constitute a diffusion zone, wherein at least one constituent of the glass or the base body is diffused into the oxide layer. This diffusion can effect a strong chemical bond. Thus, by means of this metal oxide layer 11, a chemical bond can be formed through ions diffusion from the base body to glass and vice versa.

According to a further preferred embodiment, the base body 3 contains chromium. In particular, the base body 3 may be formed from stainless steel, which typically contains chromium. Preferably, an austenitic steel is chosen.

Chromium has the ability to form a dense and stable oxide layer 11, which, as explained above, can provide a chemical bond between the glass and the metal and/or may constitute a diffusion zone. Thus, according to a further embodiment, the wall 9 of the opening 7 of the base body 3 is covered with a chromium oxide containing layer. However, an optional oxide layer may not be the only part of a diffusion zone. Rather, according to a further embodiment, at least one constituent of the base body 3 may diffuse into the glass and/or vice versa. Thus, a diffusion zone at the glass-metal-interface may be established with at least one of the following features:

- at least one constituent of the base body 3 is diffused into the glass
- at least one constituent of the glass is diffused into the base body 3.

As described, other steel types such as AISI 430 are also possible as well as other alloys and/or metals, such as titanium. Besides of steel, further suitable materials for the base body 3 are nickel/iron alloys, such as Kovar. It is again preferred that the base body 3 is covered with a metal oxide layer. For a Ni/Fe alloy, a metal oxide layer 11 may be produced by an oxidation step. Generally, without restriction to particular metals of the base body 3, an oxide layer 11 may also be provided by a deposition process, preferably by CVD or PVD.

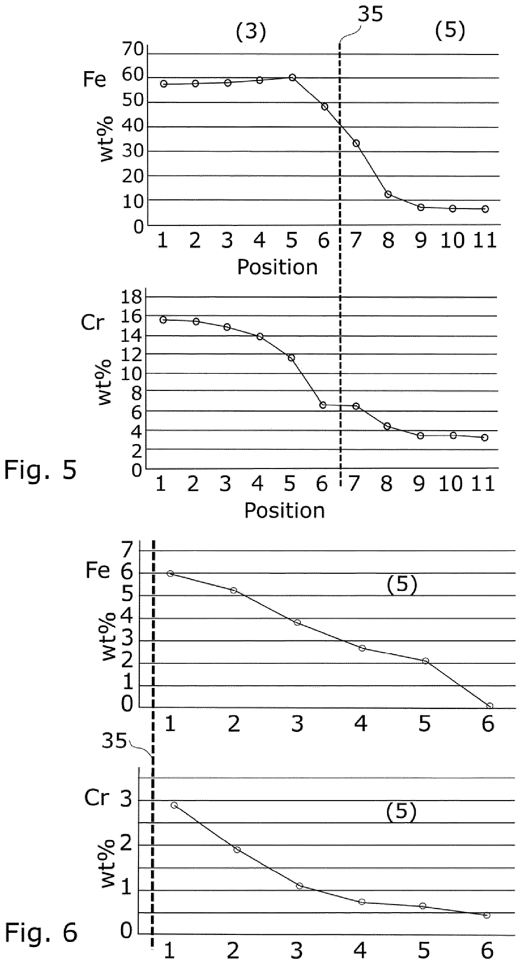

Fig. 5 shows element concentrations of iron and chromium along a line crossing the interface between the base body 3 and the glass element 5. The measurements were performed using EDX. The base body 3 is formed from stainless steel of type 316 L and thus contains iron and chromium. The measuring positions 1 to 11 are distributed along a line vertically to the interface 35 between the base body 3 and the glass element 5. The distance between the first and last measuring position is 6 $\mu$m. The upper graph shows the variation in the iron concentration and the lower graph is the variation of the chromium content. As can be seen from the graphs, there is a depletion of both iron and chromium within the metal part in a region adjacent to the interface. Likewise, both Fe and Cr are diffused into the glass in a region of the glass element 5 close to interface 35. This migration of metal ions from the base body 3 into the glass element strengthens the chemical bond between both parts 3, 5.

Thus, according to an embodiment of the component 1, at least one of the following features is present at the interface 35:

- the base body 3 contains iron and there is a depletion of the iron content of the base body in a region adjacent to the interface 35 between the base body 3 and the glass element, whereas the glass element has an increased iron content in a region adjacent to the interface 35,
- the base body 3 contains chromium and there is a depletion of the chromium content of the base body in a region adjacent to the interface 35 between the base body 3 and the glass element, whereas the glass element has an increased chromium content in a region adjacent to the interface 35.

Further, as can be seen from the graphs of Fig. 5,

- the thickness of the region of iron depletion in the base body 3 is at least 0.5 $\mu$m, and
- the thickness of the region of chromium depletion in the base body 3 is at least 2 $\mu$m.

Fig. 6 shows element concentrations along a line within the glass element. As for Fig. 5, the line extends vertically to the interface 35. The measurement points are considerably wider apart compared to Fig. 5. Specifically, the distance between the first and the last measurement point is about 150 $\mu$m. As can be estimated from Fig. 6, the thickness of the region adjacent to the interface 35 where the iron content is increased due to diffusion from the base body 3 is at least 75 $\mu$m. The same holds for the thickness of the region with increased chromium content.

According to a further embodiment, constituents of the glass which may diffuse into the base body 3 are alkaline ions, particularly $Na^+$ and $K^+$, depending on the glass composition.

It is very advantageous and generally preferred, that the base body 3 is porous. In particular if the pores are randomly distributed within the base body, the formation of leak paths is even less likely than, e.g. for drawn metals. In the case of drawn metal parts, a defect within the metal may be elongated in the drawing process and thereby forming a leak path. However, a porosity of the base body which is too high may nevertheless result in leak paths through the base body 3 or eventually to mechanical flaws. For this reason, it is preferred that the porosity, i.e. the volume fraction of pores in the base body 3 is less than 6%. Vice versa, it is preferred that the density of the base body 3 amounts to at least 93% of the maximum theoretical density. On the other hand, the pores are very advantageous for the texture of the wall 9 which result in the improved anchoring of the glass element 5 within the opening 7. It is therefore further preferred that the porosity, i.e. the volume fraction of pores in the base body 3 amounts to at least 1.5 %.

In the following, two examples of components 1 with base body 3 having different porosity are discussed.

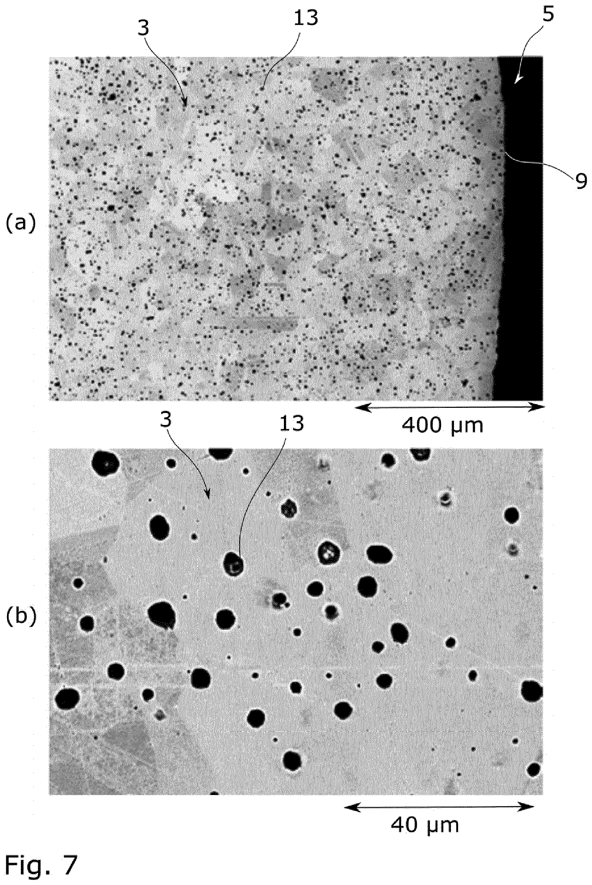

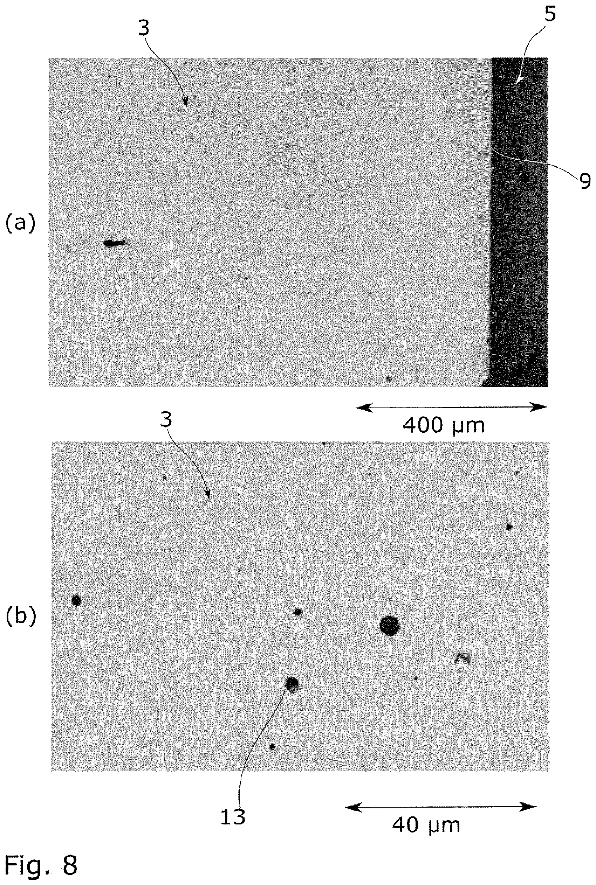

Figs. 7 and 8 each show two SEM micrographs of a cross section of the component 1 at the interface between the glass element 5 and the base body 3. The base body 3 of this example is a metal injection molded stainless steel part. As can be seen from the scale bars, the micrographs (b) have a magnification which is 10 times higher than that of micrographs (a). In the micrographs (a), the wall 9, or the interface to the glass element 5 is visible. It is clearly visible that the example of Fig. 7 has a higher porosity than the example of Fig. 8. Specifically, the example of Fig. 7 has a density of about 95 %, corresponding to a porosity of about 5%. The example of Fig. 8 has a density of 98%, or a porosity of about 2%, respectively. Porosity $\Phi$ is in the scope of the present disclosure considered to be the ratio of the sum of the volumes of the pores 13, $V_p$, relative to the volume of base body 3, $V_{mb}$ (including the pore volume):

$$\Phi = \frac{V_p}{V_{mb}}$$

Generally, the pores may be introduced during the PIM process, especially a MIM-process. From the cross section micrographs, an analysis of the pore sizes and pore density can be performed. To do so, the image contrast can be enhanced to black and white. For example, the area fraction of the pores may then be obtained by comparing the number of black pixels and white pixels. The results of the analysis for the both examples are listed in the following table:

| | Example of Fig. 7, 95% density | Example of Fig. 8, 98% density, 1st area | Example of Fig. 8, 98% density, 2nd area |
|---|---|---|---|
| Overall percentage of pore area | 4.899 % | 0.258 % | 0.324% |
| Average surface area of pore | 11.614 $\mu$m$^2$ | 1.606 $\mu$m$^2$ | 2.080 $\mu$m$^2$ |
| Largest pore surface area | 170.653 $\mu$m$^2$ | 135.688 $\mu$m$^2$ | 411.161 $\mu$m$^2$ |
| Smallest pore surface area | 0.671 $\mu$m$^2$ | 0.512 $\mu$m$^2$ | 0.512 $\mu$m$^2$ |
| Pores found | 3151 | 859 | 778 |
| Pore density (pores per 1000$\mu$m$^2$) | 5.7 | 1.63 | 1.55 |

The analysis for the example with the more dense base body was carried out at two different surface areas. As can be seen from the results, however, the magnitudes of the analyzed parameters are comparable. Both examples are within the preferred range of porosity. Without restriction to the examples of Fig. 7 and Fig. 8, it is preferred that the average surface area of the pores as seen in a SEM micrograph of a cross section is in the range from 1 $\mu m^2$ to 20 $\mu m^2$. Further, the density of pores as seen in a SEM micrograph of a cross section of the base body 3 is in the range from 1 to 10 pores per 1000 $\mu m^2$.

Generally, without restriction to the examples, the glass for the glass element 5 preferably is a soda lime glass, an alumo silicate glass or a borosilicate glass. The glass used for the glass element 5 of the above discussed examples is a soda lime glass with a linear thermal expansion coefficient $\alpha(20°C;300°C) = 9.1 \cdot 10^{-6}$/K which is comparably high. However, using a stainless steel base body 3, the difference in the thermal expansion coefficient is still sufficient to produce a compressive stress acting on the glass element 5 after cooling down the component 1.

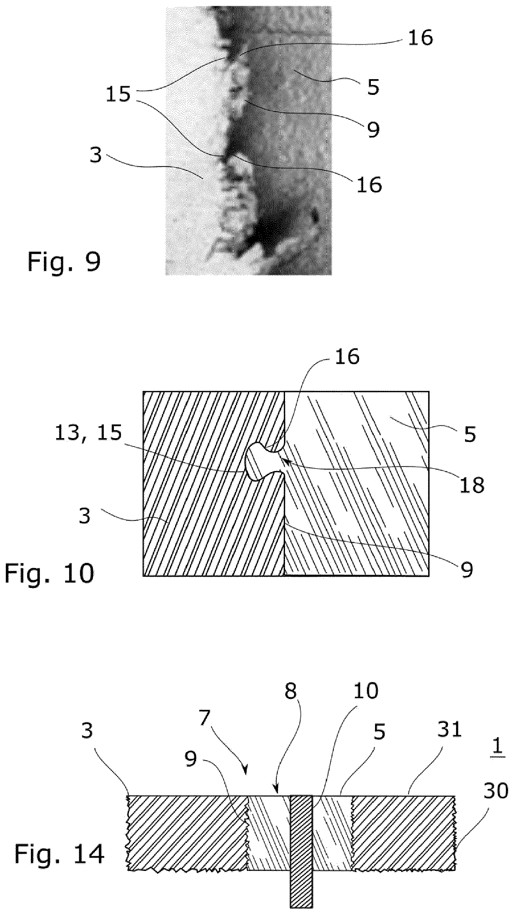

Fig. 9 shows a further SEM micrograph of a cross section crossing the wall 9 of the opening 7, or the interface between the glass element 5 and the base body 3. To further illustrate the features of the wall texture, Fig. 10 shows an idealized schematic of the surface topography of the wall 9. The pores 13 in the base body 3 are advantageous as these can provide an interlock between the glass and the base body if they open up at the surface of the wall 9. Other surface structures may provide an interlock as well. The SEM micrograph of Fig. 9 shows several interlocking features 15 of the wall texture. Thus, according to an embodiment, which is not restricted to the depicted example, the wall 9 is structured or textured so as to provide at least one interlocking element, or interlocking feature 15, respectively, wherein the glass of the glass element surrounds the interlocking feature so that the glass and the base body 3 are interlocked. In particular, the interlocking feature 15 may comprise an undercut 16. Two undercuts 16 are marked in Fig. 9.

Fig. 10 shows a segment of the wall 9 with an open pore 13. As can be seen, the pore 13 widens within the base body 3 with respect to its opening 18 at the wall 9 so that there is an undercut 16 behind the opening. The glass of the element 5 penetrates into the pore 13 and fills up the widened part of the pore 13. This way, the interlock does not only provide a blocking against a movement parallel to the wall 9, but also in a direction perpendicular to the wall 9. Of course, there may be other features of the surface texture caused by the powder injection process that provide similar locking qualities. Thus, according to an advantageous refinement, the interlocking feature 15 is formed so as to provide a locking of the glass to the base body3 in a direction perpendicular to the wall 9.

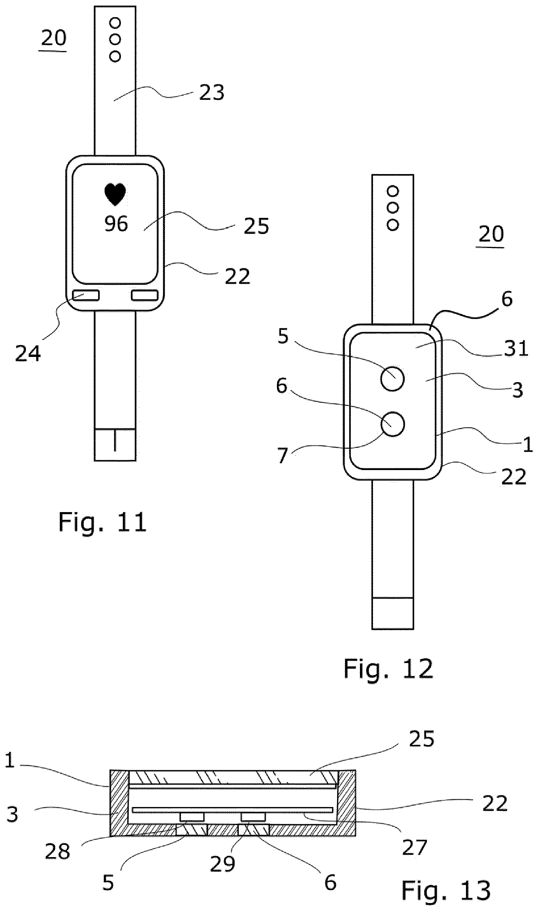

There is a variety of applications for a component 1 as described herein. According to a particular preferred embodiment, a housing 22 for an electronic device 20 is provided, wherein the housing 22 comprises a component 1 as described herein. Fig. 11 and Fig. 12 show an electronic device 20 with a housing 22 comprising the component 1 with the base body and the glass element. Specifically, as shown, the electronic device may be a wearable device. Preferably, the electronic device 20 is designed as a wrist-wearable item, in particular a wrist watch. According to a further refinement, the electronic device 20 may include a heart rate monitor.

As shown in Figs. 11, 12, the electronic device 20 may comprise a bracelet 23 by means of which the electronic device 20 can be attached to the user's arm. The measured heart rate can be displayed on display 25 arranged on a front of the housing 22. Further, the electronic device 20 may also include operating means 24 such as one or more buttons or a display 25 having touch sensitivity. Preferably, the electronic device is designed as a so-called smart watch so that the device is able to serve for a variety of functions.

Fig. 12 shows the opposite side of the electronic device 20 with the part of the housing 22 facing the user's wrist. This part of the housing 22 includes the component 1 as described herein. Preferably, the outer surface of the component 1 is a polished face 31. Generally, without being limited to the embodiment shown here, the polished face 31 may be provided with a passivation layer 32. A suitable passivation layer is a layer that comprises chromium and/or oxygen. For example, passivation layer 32 may comprise chromium oxide or consist of chromium oxide. Such a passivation layer 32 may be favorable especially for uses of the component in harsh environments and/or in application with close contact to human skin. For example, even though steel is a corrosion resistant material, upon contact with human skin a certain degree of surface degradation may nonetheless take place, resulting, for example, in a leaching out of certain substances. For example, nickel may be leached out of the base body 3, causing allergic reactions.

In the examples described above, a single element 5 is shown. However, generally, the component 1 may comprise two or more glass elements 5 seated in respective openings 7. Thus, according to a refinement which is also realized in the example of Figs. 11, 12, an electronic device 20 is provided having a housing 22 with a component 1 according to this disclosure, wherein the component 1 has two glass elements 5, 6, i.e. a component 1 with a metal body 3 and two glass elements 5,6, the glass elements 5, 6 each being seated in an opening 7 of the base body 3, wherein the base body 3 is a powder injection molded, in particular a metal injection molded element so that the walls 9 of the openings 7 have an uneven, rough texture, and wherein the glass of the glass element 5 is fused into the opening 7 so that the glass closely approximates the surface of the wall 9 and hermetically seals the opening 7.

According to a further embodiment, the electronic device 20 comprises a photoplethysmography sensor device. This embodiment is explained in more detail with respect to the example of Fig. 13. Photoplethysmography (PPG) uses a light source and a photodetector to measure the volumetric variations of blood circulation. Thus, the electronic device 20 preferably comprises a light source and a light sensor. The light source may be a light emitting diode 28 and the light sensor may be a photodiode 29. Both diodes 28, 29 may be mounted on a printed circuit board 27 accommodated in the housing 22. Further, generally and independent from the embodiment of a photoplethysmography sensor device, a light emitter and a light sensor of the electronic device 20 are positioned so that light of the light emitter (such as the light emitting diode 28) is emitted through a first element 5 and light is received by the sensor (such as the photodiode 29) through a second element 6. This is advantageous to avoid crosstalk. An arrangement with a light emitter and a sensor behind separate elements 5, 6 may also be useful for other applications, e.g. distance measurements.

For many applications and without restriction to the examples shown in the figures, the glass element 5 forms a glass window, in particular to transmit light. For example, this may be the case for the wearable device of Fig 11 or the electronic device shown in Fig. 13. According to a further, alternative or additional embodiment, the glass element may be an insulating element of an electrical feedthrough 8. An embodiment of a component 1 with an electrical feedthrough is shown in Fig. 14. The example of Fig. 14 is a variant of the example of Fig. 4. Generally, without restriction to the example, the feedthrough 8 comprises at least one electrically conductive pin 10 being fixed within the opening 7 and electrically isolated from the base body 3 by the glass element 5. The pin 10 extends through the glass element so that the pin 10 can be electrically connected at both opposite sides of the glass element 5. As in the embodiment of Fig. 4 and as shown in Fig. 14, one face 31 of the component 1 may be planed or polished, with flushing surfaces of the base body 3 and the glass element 5. In this case, also the pin 10 may be planed so that the end of the pin 10 flushes with the glass surface.

List of reference signs

| | |
|---|---|
| 1 | Component |
| 3 | Base body |
| 4 | Glass element |
| 5, 6 | Glass element |
| 7 | Opening |
| 8 | Electrical feedthrough |
| 9 | Wall of opening 7 |
| 10 | Pin |
| 11 | Oxide layer |
| 13 | Pore |
| 15 | Interlocking feature |
| 16 | Undercut |
| 18 | Opening of pore 13 |
| 20 | Electronic device |
| 22 | Housing of 20 |
| 23 | Bracelet |
| 24 | Operating means |
| 25 | Display |
| 27 | PCB = Printed Circuit Board |
| 28 | Light emitting diode |
| 29 | Photodiode |
| 30 | Outer surface of metal body 3 |
| 31 | Polished face of component 1 |
| 32 | Passivation layer |
| 35 | Interface between base body 3 and glass element 5 |

**Claims**

1. A component (1) with a base body (3) and a glass element (5), the glass element (5) being seated in an opening (7) of the base body (3), wherein the base body (3) is produced by a powder injection molding process so that the wall (9) of the opening (7) has an uneven, rough texture and the surface roughness $R_a$ of the wall (9) is within a range of from 1 $\mu$m to 5 $\mu$m, and wherein the glass of the glass element (5) is fused into the opening (7) so that the glass closely approximates the surface of the wall (9) and hermetically seals the opening. (7).

2. The component (1) according to one of the preceding claims, **characterized by** at least one of the following features:

   - the base body is a part produced by a metal injection molded process or a ceramic part produced by an injection molded process,
   - the base body (3) is porous.

3. The component (1) according to the preceding claim, **characterized by** at least one of the following features:

   - the volume fraction of pores (13) in the base body (3) is less than 6%,
   - the volume fraction of pores (13) in the base body (3) is at least 1.5 %,
   - the average surface area of the pores (13) as seen in a cross section is in the range from 1 $\mu$m$^2$ to 20 $\mu$m$^2$,
   - the density of pores (13) as seen in cross section of the base body (3) is in the range from 1 to 10 pores per 1000 $\mu$m$^2$.

4. The component (1) according to one of the preceding claims, **characterized by** at least one of the following features:

   - the glass element (5) is compressively sealed within the opening (7),
   - the glass of the glass element (5) is a soda lime glass or a borosilicate glass,
   - the base body (3) has a higher linear thermal expansion coefficient $\alpha_{Metal}$ compared to the linear thermal expansion coefficient $\alpha_{Glass}$ of the glass element (5),
   - the glass of the glass element (5) and base body (3) are chemically bonded together,
   - the glass element (5) forms a window
   - the component (1) has an electrical feedthrough (8), with the glass element (5) forming an insulating element for at least one electrically conductive pin (10).

5. The component (1) according to one of the preceding claims, wherein the interface between the glass of the glass element (5) and the wall (9) of the opening (7) in the base body (3) includes an oxide layer (11).

6. The component according to the preceding claim, wherein the oxide layer (11) constitutes a diffusion zone, wherein at least one constituent of the glass or the base body (3) is diffused into the oxide layer (11).

7. The component (1) according to one of the preceding claims, **characterized by** a diffusion zone at the glass-metal-interface with at least one of the following features:

   - at least one constituent of the base body (3) is diffused into the glass
   - at least one constituent of the glass is diffused into the base body (3).

8. The component according to one of the preceding claims, **characterized by** at least one of the following features:

   - the base body (3) contains chromium,
   - the base body (3) is formed from stainless steel,
   - the wall (9) of the opening (7) of the base body (3) is covered with a chromium oxide containing layer (11).

9. The component according to one of the preceding claims, wherein the wall (9) is textured so as to provide at least one interlocking feature (15), wherein the glass of the glass element (5) surrounds the interlocking feature (15) so that the glass and the metal of the base body (3) are interlocked.

10. The component according to one of the preceding claims, wherein one face (31) of the component (1) being polished, with flushing surfaces of the base body (3) and the glass element (5).

**11.** A method of producing a component (1) according to one of the preceding claims, comprising the steps of

- providing base body (3) produced by a powder injection molding process with an opening (7), the wall (9) of the opening (7) having an uneven, rough texture with a surface roughness $R_a$ of the wall (9) in a range of from 1 $\mu$m to 5 $\mu$m as generated by the injection molding process,
- heating the base body (3) and fusing a glass element (4) to the wall (9) of the opening (7), and
- cooling down the base body (3) and the glass element to produce a glass element (5) that hermetically seals the opening (7).

**12.** The method according to the preceding claim, wherein the base body (3) has a higher shrinkage than the glass element (5) during the cooling process so that the base body (3) exerts a compressive stress to the element (5) after cooling down.

**13.** An electronic device (20) with a housing (22), wherein the housing (22) comprises a component (1) according to one of claims 1 to 10 or produced using a method according to one of claims 11, 12.

**14.** The electronic device according to the preceding claims, having at least one of the following features:

- the electronic device (20) is a wearable device,
- the electronic device (20) comprises a photoplethysmography sensor device,
- the component (1) has two glass elements (5, 6)
- a light emitter and a light sensor of the electronic device 20 are positioned so that light of the light emitter is emitted through a first element (5) and light is received by the sensor through a second element.

**Patentansprüche**

**1.** Bauteil (1) mit einem Grundkörper (3) und einem Glaselement (5), wobei das Glaselement (5) in einer Öffnung (7) des Grundkörpers (3) sitzt, wobei der Grundkörper (3) durch ein Pulverspritzgussverfahren hergestellt ist, so dass die Wandung (9) der Öffnung (7) eine unebene, raue Struktur aufweist und die Oberflächenrauheit $R_a$ der Wandung (9) in einem Bereich von 1 $\mu$m bis 5 $\mu$m liegt, und wobei das Glas des Glaselements (5) in die Öffnung (7) eingeschmolzen ist, so dass das Glas eng an der Oberfläche der Wandung (9) anliegt und die Öffnung (7) hermetisch abdichtet.

**2.** Bauteil (1) nach einem der vorhergehenden Ansprüche, **gekennzeichnet durch** mindestens eines der folgenden Merkmale:

- der Grundkörper ist ein durch ein Metallspritzgussverfahren hergestelltes Teil oder ein durch ein Spritzgussverfahren hergestelltes Keramikteil,
- der Grundkörper (3) ist porös.

**3.** Bauteil (1) gemäß dem vorhergehenden Anspruch, **gekennzeichnet durch** mindestens eines der folgenden Merkmale:

- der Volumenanteil der Poren (13) in dem Grundkörper (3) beträgt weniger als 6 %,
- der Volumenanteil der Poren (13) in dem Grundkörper (3) beträgt mindestens 1,5 %,
- die mittlere Oberfläche der Poren (13) im Querschnitt betrachtet liegt im Bereich von 1 $\mu$m$^2$ bis 20 $\mu$m$^2$,
- die Dichte der Poren (13) im Querschnitt des Grundkörpers (3) betrachtet liegt im Bereich von 1 bis 10 Poren pro 1000 $\mu$m$^2$.

**4.** Bauteil (1) nach einem der vorhergehenden Ansprüche, **gekennzeichnet durch** mindestens eines der folgenden Merkmale:

- das Glaselement (5) unterliegt einer abdichtenden Druckspannung in der Öffnung (7),
- das Glas des Glaselements (5) ist ein Kalk-Natron-Glas oder ein Borosilikatglas,
- der Grundkörper (3) weist im Vergleich zu dem linearen Wärmeausdehnungskoeffizienten $\alpha_{Glas}$ des Glaselements (5) einen höheren linearen Wärmeausdehnungskoeffizienten $\alpha_{Metall}$ auf,
- das Glas des Glaselements (5) und der Grundkörper (3) sind chemisch miteinander verbunden,

- das Glaselement (5) bildet ein Fenster,
- das Bauteil (1) weist eine elektrische Durchführung (8) auf, wobei das Glaselement (5) ein isolierendes Element für mindestens einen elektrisch leitfähigen Stift (10) bildet.

5. Bauteil (1) nach einem der vorhergehenden Ansprüche, wobei die Grenzfläche zwischen dem Glas des Glaselements (5) und der Wandung (9) der Öffnung (7) in dem Grundkörper (3) eine Oxidschicht (11) umfasst.

6. Bauelement gemäß dem vorhergehenden Anspruch, wobei die Oxidschicht (11) eine Diffusionszone darstellt, wobei mindestens ein Bestandteil des Glases oder des Grundkörpers (3) in die Oxidschicht (11) eindiffundiert ist.

7. Bauteil (1) nach einem der vorhergehenden Ansprüche, **gekennzeichnet durch** eine Diffusionszone an der Glas/Metall-Grenzfläche mit mindestens einem der folgenden Merkmale:

   - mindestens ein Bestandteil des Grundkörpers (3) ist in das Glas eindiffundiert,
   - mindestens ein Bestandteil des Glases ist in den Grundkörper (3) eindiffundiert.

8. Bauteil nach einem der vorhergehenden Ansprüche, **gekennzeichnet durch** mindestens eines der folgenden Merkmale:

   - der Grundkörper (3) enthält Chrom,
   - der Grundkörper (3) ist aus Edelstahl ausgebildet,
   - die Wandung (9) der Öffnung (7) des Grundkörpers (3) ist mit einer chromoxidhaltigen Schicht (11) bedeckt.

9. Bauteil nach einem der vorhergehenden Ansprüche, wobei die Wandung (9) derart strukturiert ist, dass sie mindestens ein Verzahnungsmerkmal (15) bereitstellt, wobei das Glas des Glaselements (5) das Verzahnungsmerkmal (15) umschließt, so dass das Glas und das Metall des Grundkörpers (3) ineinandergreifen.

10. Bauteil nach einem der vorhergehenden Ansprüche, wobei eine Seitenfläche (31) des Bauteils (1) poliert ist, wobei Oberflächen des Grundkörpers (3) und des Glaselements (5) zueinander fluchten.

11. Verfahren zur Herstellung eines Bauteils (1) nach einem der vorhergehenden Ansprüche, mit folgenden Schritten:

    - Bereitstellen eines durch ein Pulverspritzgussverfahren hergestellten Grundkörpers (3) mit einer Öffnung (7), wobei die Wandung (9) der Öffnung (7) eine unebene, raue Struktur mit einer Oberflächenrauheit $R_a$ der Wandung (9) in einem Bereich von 1 $\mu$m bis 5 $\mu$m aufweist, wie sie durch das Spritzgussverfahren erzeugt wird,
    - Erhitzen des Grundkörpers (3) und Anschmelzen eines Glaselements (4) an die Wandung (9) der Öffnung (7) und
    - Abkühlen des Grundkörpers (3) und des Glaselements, um ein Glaselement (5) zu erzeugen, das die Öffnung (7) hermetisch abdichtet.

12. Verfahren gemäß dem vorhergehenden Anspruch, wobei der Grundkörper (3) während des Abkühlvorgangs eine höhere Schrumpfung erfährt als das Glaselement (5), so dass der Grundkörper (3) nach dem Abkühlen eine Druckspannung auf das Element (5) ausübt.

13. Elektronisches Gerät (20) mit einem Gehäuse (22), wobei das Gehäuse (22) ein Bauteil (1) nach einem der Ansprüche 1 bis 10 umfasst oder mit einem Verfahren nach einem der Ansprüche 11, 12 hergestellt wurde.

14. Elektronisches Gerät gemäß den vorhergehenden Ansprüchen, mit mindestens einem der folgenden Merkmale:

    - das elektronische Gerät (20) ist ein am Körper tragbares Gerät,
    - das elektronische Gerät (20) umfasst ein Photoplethysmographie-Sensorbauteil,
    - das Bauteil (1) weist zwei Glaselemente (5, 6) auf,
    - ein Lichtemitter und ein Lichtsensor des elektronischen Geräts (20) sind derart angeordnet, dass Licht von dem Lichtemitter durch ein erstes Element (5) hindurch abgestrahlt wird und Licht durch ein zweites Element hindurch durch den Sensor empfangen wird.

**Revendications**

1. Composant (1) avec un corps de base (3) et un élément de verre (5), l'élément de verre (5) étant assis dans une ouverture (7) du corps de base (3), dans lequel le corps de base (3) est produit par un processus de moulage par injection de poudre de telle manière que la paroi (9) de l'ouverture (7) a une texture inégale, rugueuse et la rugosité de surface $R_a$ de la paroi (9) est dans une plage de 1 $\mu$m à 5 $\mu$m, et dans lequel le verre de l'élément de verre (5) est fondu dans l'ouverture (7) de telle manière que le verre approche étroitement de la surface de la paroi (9) et scelle hermétiquement l'ouverture (7).

2. Composant (1) selon l'une des revendications précédentes, **caractérisé par** au moins une des caractéristiques suivantes :

   le corps de base est une partie produite par un processus de moulage par injection de métal ou une partie céramique produite par un processus de moulage par injection,
   le corps de base (3) est poreux.

3. Composant (1) selon la revendication précédente, **caractérisé par** au moins une des caractéristiques suivantes :

   la fraction de volume des pores (13) dans le corps de base (3) est inférieure à 6%,
   la fraction de volume des pores (13) dans le corps de base (3) est au moins de 1,5%,
   l'aire de surface moyenne des pores (13) vues en section transversale est dans une plage de 1 $\mu$m$^2$ à 20 $\mu$m$^2$,
   la densité des pores (13) vues en section transversale est dans une plage de 1 à 10 pores par 1000 $\mu$m$^2$.

4. Composant (1) selon l'une des revendications précédentes, **caractérisé par** au moins une des caractéristiques suivantes :

   l'élément de verre (5) est scellé en étant comprimé dans l'ouverture (7),
   le verre de l'élément de verre (5) est un verre sodocalcique ou un verre de borosilicate,
   le corps de base (3) a un coefficient de dilatation thermique linéaire $\alpha_{Métal}$ plus grand en comparaison du coefficient de dilatation thermique linéaire $\alpha_{Verre}$ de l'élément de verre (5),
   le verre de l'élément de verre (5) et le corps de base (3) sont liés chimiquement ensemble,
   l'élément de verre (5) forme une fenêtre
   le composant (1) comporte une traversée électrique (8), avec l'élément de verre (5) formant un élément isolant pour au moins une broche (10) électriquement conductrice.

5. Composant (1) selon l'une des revendications précédentes, dans lequel l'interface entre le verre de l'élément de verre (5) et la paroi (9) de l'ouverture (7) dans le corps de base (3) inclut une couche d'oxyde (11).

6. Composant (1) selon la revendication précédente, dans lequel la couche d'oxyde (11) constitue une zone de diffusion, dans lequel au moins un constituant du verre ou du corps de base (3) est diffusé dans la couche d'oxyde (11).

7. Composant (1) selon l'une des revendications précédentes, **caractérisé par** une zone de diffusion au niveau de l'interface verre-métal avec au moins une des caractéristiques suivantes ;

   au moins un constituant du corps de base (3) est diffusé dans le verre
   au moins un constituant du verre est diffusé dans le corps de base (3).

8. Composant (1) selon l'une des revendications précédentes, **caractérisé par** au moins une des caractéristiques suivantes :

   le corps de base (3) contient du chrome,
   le corps de base (3) est formé à partir d'acier inoxydable,
   la paroi (9) de l'ouverture (7) du corps de base (3) est couverte avec une couche contenant de l'oxyde de chrome (11).

9. Composant (1) selon l'une des revendications précédentes, dans lequel la paroi (9) est texturée de façon à fournir au moins un élément d'imbrication (15),
   dans lequel le verre de l'élément de verre (5) entoure l'élément d'imbrication (15) de telle manière que le verre et le métal du corps de base (3) sont imbriqués.

10. Composant (1) selon l'une des revendications précédentes, dans lequel une face (31) du composant (1) est polie, avec des surfaces à niveau du corps de base (3) et de l'élément de verre (5).

11. Procédé de production d'un composant (1) selon l'une des revendications précédentes, comprenant les étapes de

fournir un corps de base (3) produit par un processus de moulage par injection de poudre avec une ouverture (7), la paroi (9) de l'ouverture (7) ayant une texture inégale, rugueuse avec une rugosité de surface $R_a$ de la paroi (9) dans une plage de 1 $\mu$m à 5 $\mu$m telle que générée par le processus de moulage par injection, chauffer le corps de base (3) et faire fondre un élément de verre (4) sur la paroi (9) de l'ouverture (7), et refroidir le corps de base (3) et l'élément de verre pour produire un élément de verre (5) qui scelle hermétiquement l'ouverture (7).

12. Procédé selon la revendication précédente, dans lequel le corps de base (3) a une retrait supérieur à l'élément de verre (5) pendant le processus de refroidissement de telle manière que le corps de base (3) exerce une contrainte de compression sur l'élément de verre (5) après le refroidissement.

13. Dispositif électronique (20) avec un boîtier (22), dans lequel le boîtier (22) comprend un composant (1) selon l'une des revendications 1 à 10 ou produit en utilisant un procédé selon l'une des revendications 11, 12.

14. Dispositif électronique selon les revendications précédentes, ayant au moins une des caractéristiques suivantes :

le dispositif électronique (20) est un dispositif portable,
le dispositif électronique (20) comprend un dispositif capteur de photophléthysmographie,
le composant (1) comporte deux éléments de verre (5, 6)
un émetteur de lumière et un capteur de lumière du dispositif électronique (20) sont positionnés de telle manière que la lumière de l'émetteur de lumière est émise à travers un premier élément (5) et la lumière est reçue par le capteur à travers un second élément.

Fig. 1

Fig. 2

Fig. 3

Fig. 4

Fig. 5

Fig. 6

Fig. 7

(a)

400 µm

(b)

40 µm

Fig. 8

**Fig. 9**

**Fig. 10**

**Fig. 14**

Fig. 11

Fig. 12

Fig. 13

**REFERENCES CITED IN THE DESCRIPTION**

**Patent documents cited in the description**

- US 4921738 A